# EUROPEAN PATENT APPLICATION

(11) **EP 3 945 414 A1**
(43) Date of publication of application: **02.02.2022**
(21) Application number: 20188550.6
(22) Date of filing: 30.07.2020
(51) Int. Cl.: G06F 8/41, G06F 11/34

(54) **METHOD AND COMPUTER-IMPLEMENTED TOOL FOR OPTIMIZING A CYBER-PHYSICAL SYSTEM IN TERMS OF SYSTEM ARTIFACTS AND CYBER-PHYSICAL SYSTEM**

(71) Applicant: Siemens Aktiengesellschaft, 80333 München (DE)
(72) Inventor: Elsner, Christoph, 91052 Erlangen (DE); Figalist, Iris, 80687 München (DE); Schultis, Klaus-Benedikt, 90408 Nürnberg (DE)

(57) **Abstract**

In order to optimize a cyber-physical system (CPS) in terms of system artifacts (SA), by which the optimization is automated at least partially, it is proposed to optimize the cyber-physical system (CPS) in terms of effort, cost, and error-proneness to improve, in particular iteratively, quality of design, implementation, validation and documentation of the system artifacts (SA) being realized in hardware or software and based on collected usage data (UD) encompassing the usages of at least one interface (IF) of the cyber-physical system (CPS) by: (i) monitoring the usages of the at least interface by accesses of system users (SYU) to collect the usage data (UD), (ii) analyzing at least the usage data (UD) and system-artifacts-data (SAD) related to the system artifacts (SA), (iii) computing at least one optimization of the system artifacts (SA) based on the analysis and corresponding analysis information (AIF), (iv) generating at least one improved system artifact (SAᵢ) based on the computed optimization, (v) validating the cyber-physical system (CPS) in terms of the at least one improved system artifact (SAᵢ) to ensure from a functional and quality perspective a correct operation of the cyber-physical system (CPS), (vi) forming an optimized cyber-physical system (CPSₒ) based on assembling the improved system artifact (SAᵢ) and (vii) deploying the optimized cyber-physical system (CPSₒ) to its operational environment.

## Description

The invention refers to a method for optimizing a cyber-physical system in terms of system artifacts according to the preamble of claim 1, a computer-implemented tool for optimizing a cyber-physical system in terms of system artifacts according to the preamble of claim 10 and a cyber-physical system according to claim 19
A cyber-physical system (CPS) is according to https://en.wikipedia.org/wiki/Cyber-physical system in the version of June 30, 2020 a computer system in which a mechanism is controlled or monitored by computer-based algorithms. In cyber-physical systems, physical and software components are deeply intertwined, able to operate on different spatial and temporal scales, exhibit multiple and distinct behavioral modalities, and interact with each other in ways that change with context. A non-exhaustive list of examples of what is included in the cyber-physical system are smart grid, autonomous automobile systems, medical monitoring, industrial control systems, robotics systems, and automatic pilot avionics.

The cyber-physical system involves transdisciplinary approaches, merging theory of cybernetics, mechatronics, design and process science. The process control is often referred to as embedded systems. In embedded systems, the emphasis tends to be more on the computational elements, and less on an intense link between the computational and physical elements. The cyber-physical system is also similar to the Internet of Things (IoT), sharing the same basic architecture; nevertheless, CPS presents a higher combination and coordination between physical and computational elements.

Precursors of cyber-physical systems can be found in and are related to technology areas as diverse as aerospace, automotive, chemical processes, civil infrastructure, energy, healthcare, manufacturing, transportation, communication, entertainment, and consumer appliances.

Characteristics or attributes of cyber-physical systems are inter alia system artifacts which are split in software system artifacts and hardware system artifacts. An artifact in its general meaning - independently from the software and hardware category - is something made (e.g. developed, engineered, etc.) or given shape by humans, such as a tool or a work of art. Typical system artifacts are interfaces and thus in the form of software and hardware interfaces, which are either used by other technical systems or other subjects, such as humans. These interfaces are implemented, validated and documented by engineers with an expected usage in mind.

Then, after the deployment of the cyber-physical system and in order to optimize and thereby improving the cyber-physical system in terms of the system artifacts, data of interface usages are collected. Based on the actual usage data of the interface, engineers adapt their interface designs and implementations to improve on qualities and functionalities of the cyber-physical system.

The current practice is to collect usage data of the interfaces in operation in a semi-automated or automated way. This data is then interpreted and analyzed by engineers. This knowledge gained is used to manually improve the interface design, implement the design, as well as care for proper validation and documentation of the improved interfaces. This current solution requires significant manual effort and cost in each improvement cycle.

It is an objective of the invention to propose a method and computer-implemented tool for optimizing a cyber-physical system in terms of system artifacts as well as a cyber-physical system, by which the optimization is automated at least partially.

This objective is solved with regard to a method defined in the preamble of claim 1 by the features in the characterizing part of claim 1.

The objective is further solved with regard to a computer-implemented tool defined in the preamble of claim 10 by the features in the characterizing part of claim 10.

The objective is solved furthermore with regard to a cyber-physical system by the features of claim 19.

The main idea of the invention according to the claims 1, 10 and 19 is to optimize a cyber-physical system defined above in terms of system artifacts, in terms of effort, costs and error-proneness to improve, in particular iteratively, quality of design, implementation, validation and documentation of the system artifacts being realized in hardware or software and based on collected usage data encompassing the usages of at least one interface of the cyber-physical system by: **(i)** monitoring the usages of the at least interface by accesses of system users to collect the usage data, **(ii)** analyzing at least the usage data and system-artifacts-data related to the system artifacts, **(iii)** computing at least one optimization of the system artifacts based on the analysis and corresponding analysis information, **(iv)** generating at least one improved system artifact based on the computed optimization, **(v)** validating the cyber-physical system in terms of the at least one improved system artifact to ensure from a functional and quality perspective a correct operation of the cyber-physical system, **(vi)** forming an optimized cyber-physical system based on assembling the improved system artifact and **(vii)** deploying the optimized cyber-physical system to its operational environment.

The iterative improvement cycle is carried out such that after further validation and documentation, the changed cyber-physical system is re-deployed, further usage data is collected, which is in turn used for further improvement steps.

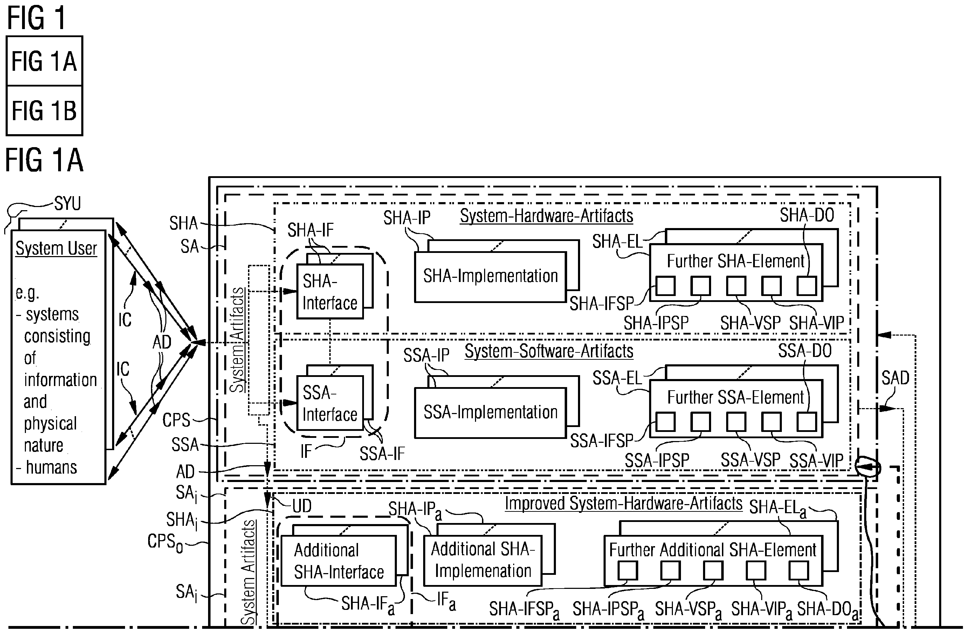

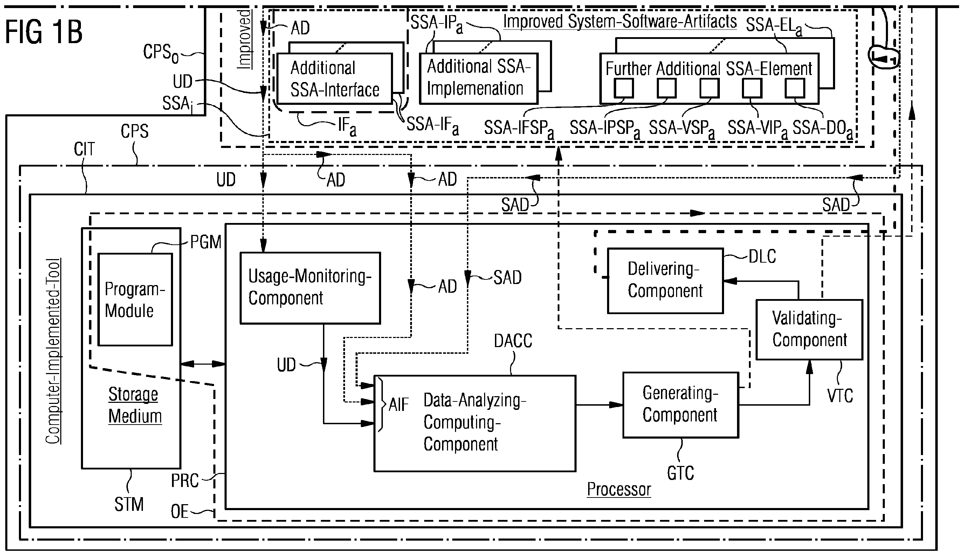

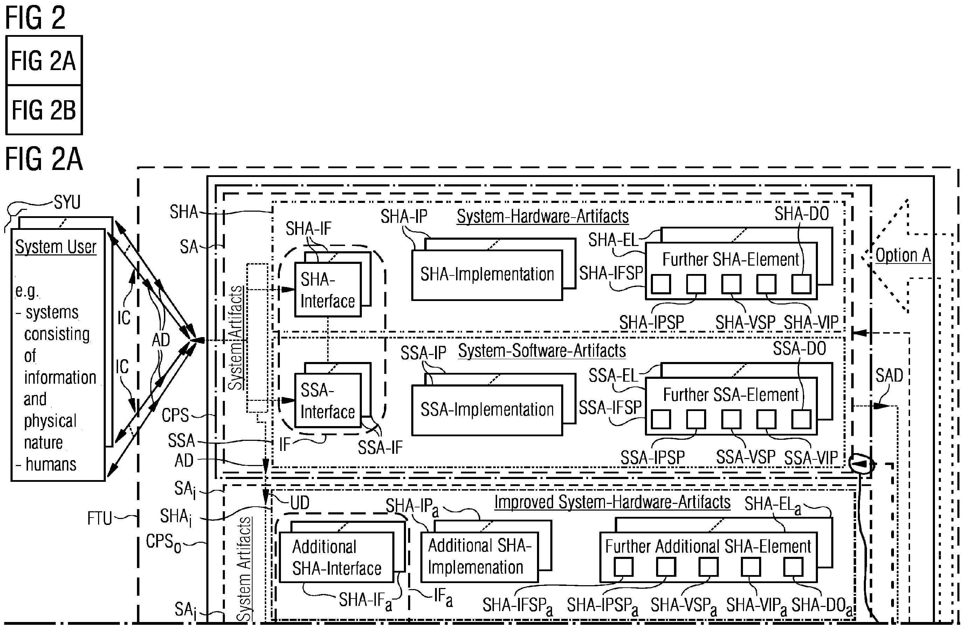

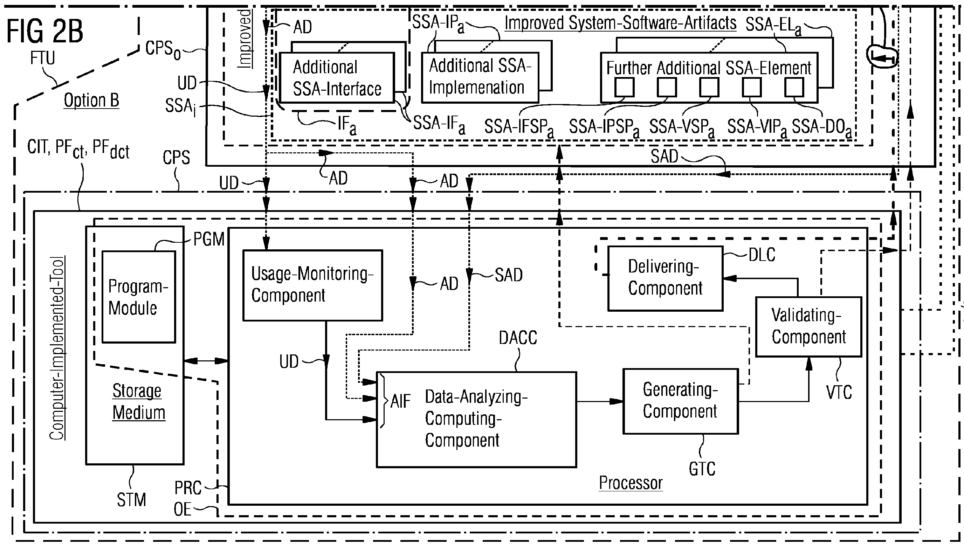

To carry out the afore-summarized optimization of the cyber-physical system in terms of the system artifacts and the effort, the costs and the error-proneness to improve the quality of the design, the implementation, the validation and the documentation of the system artifacts being realized in hardware or software a computer-implemented tool with the following components, which interact with each other via control flow and data flow is proposed (cf. FIGURES 1 and 2):
(1) Usage Monitor: This component monitors all usages of the at least one interface of the cyber-physical system by accesses of system users and collects the usage data respectively the data on the usages, which include or are e.g. identifier of the called interface, parameters, timestamp, duration, caller, etc..
(2) Data Analyzer/Computer: This component takes as input (i) the collected usage data, (ii) the system artifacts data of the cyber-physical system to be optimized, if available (e.g. interface, interface implementation, validators (e.g., test cases), documentation), as well as (iii) additional data (e.g., source code of the system users calling the at least one interface).
   These inputs to the computer-implemented tool depend on the cyber-physical system to be optimized and are not part of the computer-implemented tool itself. Based on this input, this component automatically computes optimized system artifacts.
   (2a) In particular, the component detects patterns - e.g. in the case of at least one hardware-related interface typical button usage sequences, typical sequences of navigations via a touchscreen etc. and in the case of at least one software-related interface recurring sequences of "Representation State Transfer <REST>"-interface calls, recurring sets of parameters passed in "Representation State Transfer <REST>"-interface call sequences, etc. - or uses other inputs - e.g. in the case of at least one hardware-related interface original button layout plans on the CPS-system, original touchscreen user interface design etc. and in the case of at least one software-related interface source code of a client-system as the system user, original "Representation State Transfer <REST>"-interface specification, implementation etc. - in subsequent usages and interface calls and automatically computes at least one correct additional system artifact, e.g. at least one additional interface, that provide functional identical results while optimizing other quality attributes of the cyber-physical system to be optimized.
      Correctness verification is done by doing at least one of the following:
      (2a-1) by applying interface refactoring to guarantee the system artifact, e.g. the interface, optimization is syntactically correct (cf. refactoring theory), and
      (2a-2) by checking correctness via already previously implemented and newly generated validators (cf. (4)). The improved quality attributes of the at least one added system artifact, e.g. the at least one added system interface, explicitly include, but they are not limited to:
         a. Reducing the number of interface usages (interface calls) required to achieve the same functionality
         b. Reduction of parameters to be provided to interfaces to achieve a use case
         c. Optimizing on operational qualities, for example, a system performance on the system user side and a system load on the cyber-physical system side.
   (2b) In case already the at least one existing system artifact, e.g. the at least one existing system interface, are modified, the component computes the modification ensuring that all rules defined for artifact compatibility are adhered to. Typically, this includes the rule that all previous allowed usages of the interface must still return functionally correct results and that all defined quality characteristics of the at least one system artifact, e.g. the at least one interface, (e.g. system performance) still apply.
   (2c) The input data is furthermore used to compute additional validators, e.g. test cases, for the improved the at least one system artifact, e.g. the improved at least one interface, specifically taking existing validators of previous artifact respectively interface versions as input to generate new validators. Their purpose is to ensure that the validation criteria of functional and quality characteristics of the at least one original system artifact, e.g. the at least one original interface, of the system are transferred to the improved ones.
(3) Generator: Based on the computed optimizations, improved system artifacts are generated by this component. This generation component includes the generation of system interfaces, system implementations, system validators (e.g. test cases) and/or system documentations.
(4) Validation: This component validates that the cyber-physical system still operates correctly. In particular, the previously generated improved validators are used to ensure that the at least one newly generated additional system artifact, e.g. the at least one newly generated additional interface and/or implementation is correct from a functional and quality perspective.
(5) A delivery component assembles the system artifacts to form a new, optimized cyber-physical system and deploys the optimized cyber-physical system to its operational environment.

If the at least one system artifact, e.g. the at least one system interface, the at least one system implementation, the at least one system validation, etc. and the afore-cited component, especially the delivery component, of the cyber-physical system are based on software, full automation of all aforementioned steps is possible.

For the cyber-physical system the optimization of a system software artifact, e.g. a system software interface, may be fully automated, whereas, for a system hardware artifact, e.g. a system hardware interface, (e.g., mechanical, electronic, human-machine interact interface), at minimal the specification of an improved system hardware interface can be automated.

Once the at least one automatically created or changed system artifact, e.g. the at least one system interface, is part of the cyber-physical system, it can be treated exactly as the at least one existing system artifact, e.g. the at least one existing system interface. This includes:
(a) monitoring of interface usage, in order to further improve the at least one existing system artifact, e.g. the at least one existing system interface, in further improvement cycle
(b) giving lifecycle guarantees for the at least one system artifact, e.g. the at least one system interface, based on system artifact respectively system interface lifecycle policies of the cyber-physical system.

Exemplary interface lifecycle policies are:
(I) Beta: limited guarantee, the system artifact respectively the system interface may be changed or removed at end of beta phase.
(II) Full guarantee: The system artifact respectively the system interface will be supported in the current or a fully compatible form for a guaranteed time span, that allows reliable application development for clients based on the system artifact respectively the system interface.

The advantages of optimizing cyber-physical systems in this way are significantly reduced cost and effort as well as a speed-up in the cyber-physical system development lifecycle via the automation of a previously vastly manual process to improve quality factors of the cyber-physical system such as usability and performance. Furthermore, the quality of system characteristics can be improved while the correctness with regards to functionality and other qualities is ensured.

By creating a chain of automated components that avoid human intervention, the computer-implemented tool allows for cost and effort reduction, as well as the speed-up in the cyber-physical system development lifecycle.

The improved quality while preserving the correctness of the cyber-physical system is ensured by
- taking multiple data sources as input (in particular, on the usage of the cyber-physical system, the original system design and implementation, as well as the validators of the original system, and if available source code of using systems), which allows to apply automated transformative improvements, e.g. by using transformation algorithms, that can be guaranteed to preserve functional and quality characteristics, while improving on other qualities (e.g., usability, performance).
- the avoidance of manual errors through automation.

Unique aspects of the invention are:
- The combination of latest technologies and method elements (e.g., usage monitoring, data and code analysis, code transformation, automated validation and deployment) which results in a novel automated optimization method - implemented via a computer-implemented tool - in a novel way to achieve vast (up to complete) automation of a commonly manual process of cyber-physical system improvement.
- In particular, the integrated validation of the cyber-physical system is a key element for full automation.

The invention can be instantiated in different ways. It can be used for optimization of software, optimization of hardware, optimization of both. Depending on the characteristics of the optimization problem, the optimization system can work in a fully automated or partially automated way. The two examples are:

### A. Software Optimization of Cloud-based Server System

The proposed method and computer-implemented tool for optimizing a cyber-physical system in terms of system artifacts and cyber-physical system can, for example, optimize the quality characteristics of network-accessible, software-defined interfaces (such as "Representation State Transfer <REST>"- interfaces) of Cloud-based Server Systems as the cyber-physical system.

Functionalities of the proposed method and computer-implemented tool in this example:
- The proposed method and computer-implemented tool detects recurring patterns in sequences and provided parameters of REST operation calls.
- It generates additional, optimized REST-operations that combine multiple REST-calls into a single call, and that reduce the set of parameters to be provided.
- In doing so the proposed method and computer-implemented tool improves for example the following qualities
   -- "developer usability": Programmers of new cloud-based client systems can make use of the newly generated REST operation. Therefore they can implement the client system faster and in a less-error prone way.
   -- "performance": As the REST-calls are combined to a single call on server side, a reduced number of network calls is required. The avoided network traffic results in reduced time and a better performance on the cloud-based system side to achieve its overall task compared to the additional, multiple network calls.

Particular characteristics for this example A are:
- The proposed method and computer-implemented tool works in a fully automated way. Human participation in the optimization process is not required.
- One aspect that makes full automation feasible for this example is that the Generator produces a "complete" set of digital artifacts (new specifications, implementation, documentation, validators). Completeness of artifacts refers to the fact that the set of artifacts is sufficient for the delivery of a new version of the cloud-based server system that has the optimized interfaces. Furthermore, as the artifacts are fully digital in this example (i.e., software, digital documentation, etc.), the delivery can be achieved in a fully automated way, using state of the art mechanisms such as continuous integration and continuous deployment and delivery.

### B. Hardware & Software Optimization of an Industrial Device

As a further example, the proposed method and computer-implemented tool can optimize a device in an industrial plant. It can generate improved layout plans for the device buttons and improved user interfaces of the touchscreen of the device. In particular, the optimization system may generate an additional physical button for the device. This button then provides a quick way to access to a previously complex functionality of the device, that previously required multiple interactions of a human user with the device in the industrial plant as the cyber-physical system, via the touchscreen and buttons. After clicking the physical button, the complex functionality is either directly executed, or a further automatically generated touchscreen page ("wizard") is shown to the human user, in case further parameters need to be provided to execute the complex functionality.

In doing so, the button improves on the qualities of "end-user usability" and "end-user performance".

Functionalities of the optimization system in this example:
- The proposed method and computer-implemented tool detects typical interactions of the user with the device in the industrial plant as the cyber-physical system (buttons pressed, navigations of users across multiple touchscreen pages, and entering data across multiple of these pages).
- The proposed method and computer-implemented tool generates additional, optimized plans for button layouts, corresponding button physical wiring plans, as well as the control code implementation. For example, the proposed method and computer-implemented tool generates the layout, wiring, control code of a new button that allows to quickly execute often used functionality that otherwise would require complex interactions with buttons and touchscreen. If required, the proposed method and computer-implemented tool will generate the software code of a further "wizard" page in the touch screen user interface. This "wizard" is a newly generated touch screen page, that will open when pressing the newly generated button. The "wizard" page is optimized for the use case that the new button is generated for. The wizard page allows the human user to enter further data (variables) that the Data Analyzer component has detected that the user needs to provide in order to execute the complete functionality.
- In doing so the proposed method and computer-implemented tool improves for example the following qualities
   -- "end-user usability" and "end-user performance": The users of the industrial device can make use of the new button and touchscreen user interface, and therefore can achieve they in a more performant less-error prone way.

Particular characteristics for this example B are:
- The proposed method and computer-implemented tool works in a fully automated way in the steps Data Analyzer and Generator. The Data Analyzer and the Generator work on digital artifacts (i.e., button layout specifications, button wiring specifications, specification documents of test cases, touch screen page layouts and software implementations). The optimization of these artifacts if fully feasible, and reduces the effort of optimization of the system, while making optimizations less error-prone (e.g., automatic generation of touchscreen wizards can avoid human errors compared to manual implementation of such a wizard).
- In the steps Usage Monitor, Validation Component and Delivery Component, at least partial automation can be achieved.
   -- Automated tests can be generated and executed fully automatically for validating the correctness of newly generated touchscreen pages (in "Validation Component").
   -- Continuous integration can be applied for software artifacts such as the software for the touch screen user interface (in "Delivery Component").
- If needed, particularly, if the update of the physical hardware of the device is required, full automation may not be feasible. In this case, the automation system may still work fully automatically in the Data Analyzer/Computer and Generator stages, while the following stages may for example be partially manual:
   -- If the device has no permanent connection to optimization system (e.g. via a network/internet etc.) manual steps may become necessary to provide the collected data to the "Data Analyzer" for further processing.
   -- For testing a physical device with human interaction, often human tests are necessary. While the test specifications of tests in such a case may be digital, the actual execution may still be executed by human testers, which results in a manual task to be performed during optimization in the "Validation" stage.
   -- If the hardware of the device changes, physical production of the new version of the device is necessary (update of production planning for the new version, production of the new version, ...). Except for trivial examples, the state of the art for hardware changes commonly implies further manual steps.
   -- If the device needs to be physically exchanged on customer site, the "Delivery Component" may not be fully automated, but manual steps may be required to physically replace the old device with a new version of the device.

Moreover, advantageous further developments of the invention arise out of the following description of a preferred embodiment of the invention according to FIGURES 1 and 2. They show:
FIGURE 1 a scenario for optimizing a cyber-physical system in terms of system artifacts as an "implementation-concept",
FIGURE 2 a scenario for optimizing a cyber-physical system in terms of system artifacts as a "functional-unit-concept".

FIGURE 1 shows a scenario for optimizing a cyber-physical system CPS in terms of system artifacts SA as an "implementation-concept". The cyber-physical system CPS comprises, as already stated in the introductory part of this application, physical and software components being deeply intertwined, being able to operate on different spatial and temporal scales, exhibiting multiple and distinct behavioral modalities, and interacting with each other in ways that change with context, but these components are not depicted in the FIGURE 1, because they are out of scope to the present application and the embodiment of the invention being under consideration in the application.

What is under consideration? It is how the cyber-physical system CPS can be optimized in terms of the system artifacts SA.

For this reason only the system artifacts SA are depicted. According to this depiction in the FIGURE 1 the system artifacts SA of the cyber-physical system CPS can be divided into two categories, system-hardware-artifacts <SHA> SHA and system-software-artifact <SSA> SSA, which are to be improved or updated to optimize the cyber-physical system CPS. The optimization can be carried out preferably from time to time in an iterative improvement cycle and is automated at least partially as it will be described in the following.

The system-hardware-artifacts SHA are system artifacts realized in hardware, whereas consequently the system-software-artifacts SHA are system artifacts realized in software. As further shown, towards the system-hardware-artifacts SHA count SHA-interfaces SHA-IF, SHA-implementations SHA-IP, SHA-interface specifications SHA-IFSP, SHA-implementation specification SHA-IPSP, SHA-validator-specifications SHA-VSP, SHA-validator-implementations SHA-VIP and SHA-documentations SHA-DO, however in a non-exhaustive list.

The same applies regarding the system-software-artifacts SSA towards which SSA-interfaces SSA-IF, SSA-implementations SSA-IP, SSA-interface specifications SSA-IFSP, SSA-implementation specification SSA-IPSP, SSA-validator-specifications SSA-VSP, SSA-validator-implementations SSA-VIP and SSA-documentations SSA-DO are count also in a non-exhaustive list.

The non-exhaustive lists can be expanded in principle as desired, but with respect to the invention it should at least one of
- with regard to the system-hardware-artifacts SHA either at least one SHA-interface SHA-IF and at least one SHA-implementation SHA-IP or at least one SHA-interface SHA-IF, at least one SHA-implementation SHA-IP and at least one further SHA-element SHA-EL, which can be in particular at least one SHA-interface specification SHA-IFSP, at least one SHA-implementation specification SHA-IPSP, at least one SHA-validator-specification SHA-VSP, at least one SHA-validator-implementation SHA-VIP and/or at least one SHA-documentation SHA-DO, and
- with regard to the system-software-artifacts SSA either at least one SSA-interface SSA-IF and at least one SSA-implementation SSA-IP or at least one SSA-interface SSA-IF, at least one SSA-implementation SSA-IP and at least one further SSA-element SSA-EL, which can be in particular at least one SSA-interface specification SSA-IFSP, at least one SSA-implementation specification SSA-IPSP, at least one SSA-validator-specification SSA-VSP, at least one SSA-validator-implementation SSA-VIP and/or at least one SSA-documentation SSA-DO.

To optimize the cyber-physical system CPS in terms of the system artifacts SA according to the "implementation-concept"-scenario, towards this scenario count
- to collect, as already mentioned in the introductory part of the present application, data on usages of at least one interface IF of the cyber-physical system CPS, in the following called as usage data UD, wherein the at least one interface IF is nothing else and thus depicted in the FIGURE 1 than the at least one SHA-interface SHA-IF of the system-hardware-artifacts SHA and/or the at least one SSA-interface SSA-IF of the system-software-artifacts SSA,
- a computer-implemented tool CIT which is part of the cyber-physical system CPS.

The at least one interface IF concerning the at least one SHA-interface SHA-IF is for instance a touchscreen display and/or an input-button, whereas the at least one interface IF concerning the at least one SSA-interface SSA-IF is a "Representation State Transfer <REST>"-interface used in cloud-based server systems as the cyber-physical system CPS.

The computer-implemented tool CIT is a computer-program-product which is preferably designed as an additional application software, called also as App, that allows, when it is implemented, to perform special tasks. So, in the present case of the cyber-physical system CPS, where the computer-program-product respectively the App is implemented in the cyber-physical system CPS as additional part according to the depiction in the FIGURE 1, the computer-implemented tool CIT enables at least partially the automated optimization of the cyber-physical system CPS.

To this end the computer-implemented tool CIT comprises a non-transitory, processor-readable storage medium STM, in which processor-readable program-instructions of a program module PGM are stored. This program module PGM is used for optimizing the cyber-physical system CPS in terms of the system artifacts SA. Moreover the computer-implemented tool CIT comprises a processor PRC connected with the storage medium STM executing the processor-readable program-instructions of the program module PGM to optimize the cyber-physical system CPS in terms of the system artifacts SA, wherein the program module PGM and the processor PRC form an optimization engine OE with a usage-monitoring-component UMC, a data-analyzing-computing-component DACC, a generating-component GTC, a validating-component VTC and a delivering-component DLC interacting in the optimization engine OE for the optimization purpose.

What these five components UMC, DACC, GTC, VTC, DLC of the optimization engine OE are doing exactly regarding the optimization purpose is described next.

First, the usage-monitoring-component UMC monitors calls on the at least one interface IF, so-called interface calls IC, of system users SYU. These system users SYU are for example either other systems such as a cloud-based Client System consisting of information technology and physical nature or humans. The interface calls IC are the usages of the at least interface IF by accesses of system users SYU.

Second, the data-analyzing-computing-component DACC analyzes the usage data UD and furthermore system-artifacts-data SAD, which are related to the system artifacts SA to be optimized. The system artifacts SA used in this context could be anyone of the system-hardware-artifacts SHA and those ones among them as well as the system-software-artifacts SSA and those ones among them according to the aforementioned statements. Result of this analysis is an analysis information AIF. In particular, it includes a statistical frequency distribution of such interface calls IC and/or a statistical frequency distribution of interface call sequences that are called each with the same input parameter values.

Alternatively it is also possible that the data-analyzing-computing-component DACC analyzes the usage data UD and the system-artifacts-data SAD together with additional access data AD related to the system user accesses. These access data AD are preferably source codes of the system users SYU calling the at least one interface IF. By additionally analyzing the access data AD, in particular the source code, it is possible to identify in addition, when output parameters are used, which are the result of one interface call IC, within the source code, as input parameters for a subsequent interface call within an interface call sequence. In doing so, it is identified whether or when there is a logical connection of calls in an interface call sequence.

The analysis of the data UD, SAD, AD leads in each of the addressed options to the analysis information AIF. Based on the analysis and the corresponding analysis information AIF the data-analyzing-computing-component DACC computes at least one optimization of the system artifacts SA.

The data-analyzing-computing-component DACC of the optimization engine OE is designed preferably such that at least one pattern in subsequent interface calls is or the usages of the at least one interface IF are detected by the analysis.

Third, the generating-component GTC generates at least one improved system artifact SAᵢ based on the computed optimization.

With regard to the aforementioned cited and explained categorization of the system artifacts SA and following this categorization in its general form the at least one improved system artifact SAᵢ is according to the indicated depiction in the FIGURE 1 each one of
- an improved system-hardware-artifact <SHA> SHAᵢ including either at least one additional SHA-interface SHA-IFₐ and at least one additional SHA-implementation SHA-IPₐ or at least one additional SHA-interface SHA-IFₐ, at least one additional SHA-implementation SHA-IPₐ and at least one further additional SHA-element SHA-ELₐ, which can be in particular at least one additional SHA-interface specification SHA-IFSPₐ, at least one additional SHA-implementation specification SHA-IPSPₐ, at least one additional SHA-validator-specification SHA-VSPₐ, at least one additional SHA-validator-implementation SHA-VIPₐ and/or at least one additional SHA-documentation SHA-DOₐ,
   and
- an improved system-software-artifact <SSA> SSAᵢ including either at least one additional SSA-interface SSA-IFₐ and at least one additional SSA-implementation SSA-IPₐ or at least one additional SSA-interface SSA-IFₐ, at least one additional SSA-implementation SSA-IPₐ and at least one further additional SSA-element SSA-ELₐ, which can be in particular at least one additional SSA-interface specification SSA-IFSPₐ, at least one additional SSA-implementation specification SSA-IPSPₐ, at least one additional SSA-validator-specification SSA-VSPₐ, at least one additional SSA-validator-implementation SSA-VIPₐ and/or at least one additional SSA-documentation SSA-DOₐ.

The main target of the optimization, carried out in the data-analyzing-computing-component DACC and based of the analysis information AIF, is the improvement of interface-related system artifacts. But according to the categorization of the at least one improved system artifact SAᵢ in its general form given above it is not the only target. This means, that among the optimized and thus generated improved system artifacts SAᵢ, the optimization is computed for the at least one SHA-interface SHA-IF, the at least one SHA-interface specification SHA-IFSP, the at least one SSA-interface SSA-IF and/or the at least one SHA-interface specification SSA-IFSP.

Thus the optimization of the interface-related system artifacts either constitutes the at least one additional SHA-interface SHA-IFₐ and/or the at least one additional SSA-interface SSA-IFₐ or specifies according to the at least one additional SHA-interface specification SHA-IFSPₐ and/or the at least one additional SHA-interface specification SSA-IFSPₐ a new interface with a new interface signature being generated by the generating-component GTC regarding the generated improved system artifacts SAᵢ as depicted and indicated in the FIGURE 1 by an arrow from the GTC-block to the SAᵢ-block.

The interface signature hereby is defined, in alignment with the state of practice, as a set of input parameter types, a set of output parameter types (i.e. result types) and an identifying name of the interface.

Based on the analysis information AIF the data-analyzing-computing-component DACC computes the improved interface signature. This includes in particular:
- the improved new interface signature for those interface calls that are frequent with the same parameter values, which has the same input parameters types as the interface frequently called, but without the parameter types that are frequently set to the same parameter values.
- the improved new interface signature for those interface call sequences that are frequent with the same parameter values, which has as input parameters types a superset of all input parameter types of all interfaces involved in the call sequence, but without the parameter types that are frequently set to the same parameter values.

In addition to the interface-related system artifacts optimized and generated as described above, also other system artifacts can be optimized and generated to improve the interface-related system artifacts. In particular, this includes implementation-related system artifacts such as the at least one SHA-implementation SHA-IP, the at least one SHA-implementation specification SHA-IPSP, the at least one SSA-implementation SSA-IP and/or the at least one SSA-implementation specification SSA-IPSP.

Thus the optimization of the implementation-related system artifacts provides the at least one additional SHA-implementation SHA-IPₐ, the at least one additional SHA-implementation specification SHA-IPSPₐ, the at least one additional SSA-implementation SSA-IPₐ and/or the at least one additional SSA-implementation specification SSA-IPSPₐ being generated by the generating-component GTC regarding the generated improved system artifacts SAᵢ as depicted and indicated in the FIGURE 1 by the arrow from the GTC-block to the SAᵢ-block.

For instance, when the system artifact SA is the at least one SSA-implementation SSA-IP, the at least one additional SSA-implementation SSA-IPₐ is generated by applying the concept of code refactoring. According to the state of practice, code refactoring allows to restructure existing code, and also generate additional new code, that can be guaranteed to be functionally equivalent via mathematical transformation rules.

For example, the generated at least one additional SSA-implementation SSA-IPₐ of the at least one additional SSA-interface SSA-IFₐ with a reduced set of parameter types will comprise an interface call to the already existing at least one SSA-interface SSA-IF, whereas all parameters that are part of the set of parameter types of the at least one additional SSA-interface SSA-IFₐ are passed on unchanged, while the remaining parameters are generated to be set to fixed values, which correspond to the value that have occurred frequently during the analysis of the usage data UD.

As further example, for generating the at least one additional SSA-implementation SSA-IPₐ of the at least one additional SSA-interface SSA-IFₐ that represents a whole sequence of the interface calls IC, the implementation will include the sequence of the interface calls IC, whereas all parameters that are part of the set of parameter types of the at least one additional SSA-interface SSA-IFₐ are passed on unchanged, while the remaining parameters are generated to be set to fixed values, which correspond to the value that have occurred frequently during the analysis of the usage data UD.

In case logical connections between the function calls are detected via source code analysis, this knowledge can be used to also connect the input and output parameter types of the interface calls within the interface call sequence.

In order to generate other systems artifacts SA, the concept of code refactoring is applied correspondingly to other system artifact types such as the at least one SHA-implementation specification SHA-IPSP, e.g. given by electro-mechanical plans.

So, the generating-component GTC of the optimization engine OE is designed preferably such that the at least one additional SHA-interface specification SHA-IFSPₐ, the at least one additional SHA-implementation specification SHA-IPSP, the at least one additional SSA-interface SSA-IFₐ, the at least one additional SSA-implementation SSA-IPₐ, the at least one additional SSA-interface specification SSA-IFSPₐ and/or the at least one additional SSA-implementation specification SSA-IPSP as result of the artifact computation and the artifact generation are generated, which are syntactically correct being guaranteed by applying interface or implementation refactoring.

Furthermore, the data-analyzing-computing-component DACC and the generating-component GTC of the optimization engine OE are designed preferably such that the quality attributes of the at least one additional SSA-interface SSA-IFₐ and/or the at least one additional SSA-implementation SSA-IPₐ are improved explicitly by reducing a number of the interface calls IC or the usages of the at least one interface IF, especially the at least one SHA-interface SHA-IF or the at least one SSA-interface SSA-IF, required to achieve the same functionality, by reducing a number of parameters to be provided to the at least one interface IF, especially the at least one SHA-interface SHA-IF or the at least one SSA-interface SSA-IF, to achieve the same functionality and/or by optimizing on operational qualities. These operational qualities are for example a system performance on the side of the system user SYU and a system load on the side of the cyber-physical system CPS.

Fourth, the validating-component VTC validates the cyber-physical system CPS in terms of the at least one improved system artifact SAᵢ to ensure from a functional and quality perspective a correct operation of the cyber-physical system CPS. This validation is depicted and indicated in the FIGURE 1 by an arrow from the VTC-block to the CPS-block.

In addition to the interface-related and implementation-related system artifacts optimized and generated as described above, also validation-related system artifacts can be optimized and generated to improve the validation-related system artifacts. In particular, this includes validation-related system artifacts such as the at least one SHA-validator-specification SHA-VSP, the at least one SHA-validator-implementation SHA-VIP, the at least one SSA-validator-specification SSA-VSP and/or the at least one SSA-validator-implementation SSA-VIP.

Thus the optimization of the validation-related system artifacts provides the at least one additional SHA-validator-specification SHA-VSPₐ, the at least one additional SHA-validator-implementation SHA-VIPₐ, the at least one additional SSA-validator-specification SSA-VSPₐ and/or the at least one additional SSA-validator-implementation SSA-VIPₐ being generated by the generating-component GTC regarding the generated improved system artifacts SAᵢ as depicted and indicated in the FIGURE 1 by the arrow from the GTC-block to the SAᵢ-block.

So for instance, with reference to the at least one additional SSA-validator-specification SSA-VSPₐ and/or the at least one additional SSA-validator-implementation SSA-VIPₐ such as the concepts of code refactoring are applied directly and with respect to the at least one additional SHA-validator-specification SHA-VSPₐ and/or the at least one additional SHA-validator-implementation SHA-VIPₐ it is done correspondingly, in order to generate test cases for the at least one additional SHA-interface SHA-IFₐ and/or the at least one additional SSA-interface SSA-IFₐ which are functionally equivalent to the already existing test cases.

Sent the foregoing ahead the validating-component VTC of the optimization engine OE is moreover designed preferably such that a verification of what is provided by the at least one additional SSA-interface SSA-IFₐ and/or the at least one additional SSA-implementation SSA-IPₐ, is done by providing verifiably at least identical functional results, while quality attributes of the optimized cyber-physical system CPSₒ are improved also verifiably and/or by deploying at least one additional validator, e.g. at least one test case, according to the at least one additional SSA-validator-specification SSA-VSPₐ and/or the at least one additional SSA-validator-implementation SSA-VIPₐ. In this context the at least one additional validator is for example at least one test case.

Furthermore, the data-analyzing-computing-component DACC, the generating-component GTC and the validating-component VTC of the optimization engine OE are designed preferably such that the at least one interface IF, especially the at least one SHA-interface SHA-IF or the at least one SSA-interface SSA-IF, as result of the artifact computation and the artifact generation is modified, thereby ensuring that all rules defined for interface compatibility are adhered to. This preferably means that before the modification all usages of the at least one interface IF, the at least one SHA-interface SHA-IF or the at least one SSA-interface SSA-IF must still return functionally correct results and all defined quality characteristics, such as performance, of the at least one interface IF, the at least one SHA-interface SHA-IF or the at least one SSA-interface SSA-IF still apply.

Finally, the data-analyzing-computing-component DACC, the generating-component GTC and the validating-component VTC of the optimization engine OE are designed preferably such that the at least one additional validator according to the at least one additional SSA-validator-specification SSA-VSPₐ and/or the at least one additional SSA-validator-implementation SSA-VIPₐ as result of the artifact computation and the artifact generation and based on the analysis information AIF are generated to ensure that that validation criteria of functional and quality characteristics of the at least one SSA-interface SSA-IF of the cyber-physical system CPS are transferred to the at least one additional SSA-interface SSA-IF.

Fifth and finally after the above is implemented, the delivering-component DLC forms an optimized cyber-physical system CPSₒ based on assembling the improved system artifact SAᵢ and deploys the optimized cyber-physical system CPSₒ to its operational environment. This forming and deploying is depicted and indicated in the FIGURE 1 by an arrow from the DLC-block to the SAᵢ-block and the CPS-block through which it should be indicated that the optimized cyber-physical system CPSₒ is formed and deployed.

FIGURE 2 shows a scenario for optimizing the cyber-physical system CPS in terms of the system artifacts SA as a "functional-unit-concept". The cyber-physical system CPS comprises again, as already stated in the introductory part of this application, the physical and software components being deeply intertwined, being able to operate on different spatial and temporal scales, exhibiting multiple and distinct behavioral modalities, and interacting with each other in ways that change with context, but these components again are not depicted in the FIGURE 2, because they are out of scope to the present application and the embodiment of the invention being under consideration in the application.

What is again under consideration? It is how the cyber-physical system CPS can be optimized in terms of the system artifacts SA.

For this reason again only the system artifacts SA are depicted. According to this depiction in the FIGURE 2 again the system artifacts SA of the cyber-physical system CPS can be divided into the two categories, the system-hardware-artifacts <SHA> SHA and the system-software-artifact <SSA> SSA, which are to be improved or updated to optimize the cyber-physical system CPS. Again the optimization can be carried out preferably from time to time in an iterative improvement cycle and is automated at least partially as it will be described in the following.

Again the system-hardware-artifacts SHA are system artifacts realized in hardware, whereas consequently the system-software-artifacts SHA are system artifacts realized in software. As further shown again, towards the system-hardware-artifacts SHA count the SHA-interfaces SHA-IF, the SHA-implementations SHA-IP, the SHA-interface specifications SHA-IFSP, the SHA-implementation specification SHA-IPSP, the SHA-validator-specifications SHA-VSP, the SHA-validator-implementations SHA-VIP and the SHA-documentations SHA-DO, however again in a non-exhaustive list.

The same applies again regarding the system-software-artifacts SSA towards which the SSA-interfaces SSA-IF, the SSA-implementations SSA-IP, the SSA-interface specifications SSA-IFSP, the SSA-implementation specification SSA-IPSP, the SSA-validator-specifications SSA-VSP, the SSA-validator-implementations SSA-VIP and the SSA-documentations SSA-DO are count also in a non-exhaustive list.

The non-exhaustive lists can be expanded again in principle as desired, but with respect to the invention it should at least one of
- with regard to the system-hardware-artifacts SHA either the at least one SHA-interface SHA-IF and the at least one SHA-implementation SHA-IP or the at least one SHA-interface SHA-IF, the at least one SHA-implementation SHA-IP and the at least one further SHA-element SHA-EL, which again can be in particular the at least one SHA-interface specification SHA-IFSP, the at least one SHA-implementation specification SHA-IPSP, the at least one SHA-validator-specification SHA-VSP, the at least one SHA-validator-implementation SHA-VIP and/or the at least one SHA-documentation SHA-DO,
   and
- with regard to the system-software-artifacts SSA either the at least one SSA-interface SSA-IF and the at least one SSA-implementation SSA-IP or the at least one SSA-interface SSA-IF, the at least one SSA-implementation SSA-IP and the at least one further SSA-element SSA-EL, which again can be in particular the at least one SSA-interface specification SSA-IFSP, the at least one SSA-implementation specification SSA-IPSP, the at least one SSA-validator-specification SSA-VSP, the at least one SSA-validator-implementation SSA-VIP and/or the at least one SSA-documentation SSA-DO.

To optimize the cyber-physical system CPS in terms of the system artifacts SA according to the "functional-unit-concept"-scenario, towards this scenario count again
- to collect, as already mentioned in the introductory part of the present application, the data on usages of the at least one interface IF of the cyber-physical system CPS, in the following called as the usage data UD, wherein the at least one interface IF is nothing else and thus depicted in the FIGURE 2 than the at least one SHA-interface SHA-IF of the system-hardware-artifacts SHA and/or the at least one SSA-interface SSA-IF of the system-software-artifacts SSA,
- the computer-implemented tool CIT which in contrast to the FIGURE 1 forms a functional unit FTU with the cyber-physical system CPS.

This functional unit FTU is in particular designed according to an option A that the computer-implemented tool CIT is uploadable into the cyber-physical system CPS. Alternatively, according to an option B the computer-implemented tool CIT forms either a cloud-based, centralized platform PF_{ct} separate to the cyber-physical system CPS or a decentralized platform PF_{dct} separate to the cyber-physical system CPS.

The at least one interface IF concerning the at least one SHA-interface SHA-IF is again for instance the touchscreen display and/or the input-button, whereas the at least one interface IF concerning the at least one SSA-interface SSA-IF is the "Representation State Transfer <REST>"-interface used in cloud-based server systems as the cyber-physical system CPS.

The computer-implemented tool CIT is again a computer-program-product which is preferably designed as an additional application software, called also as App, that allows, when it is implemented, to perform special tasks. So, in the present case of the cyber-physical system CPS, where the computer-program-product respectively the App forms the functional unit FTU with the cyber-physical system CPS according to the depiction in the FIGURE 2, the computer-implemented tool CIT enables at least partially the automated optimization of the cyber-physical system CPS.

Again, to this end the computer-implemented tool CIT comprises the non-transitory, processor-readable storage medium STM, in which the processor-readable program-instructions of the program module PGM are stored. This program module PGM is used again for optimizing the cyber-physical system CPS in terms of the system artifacts SA. Moreover the computer-implemented tool CIT comprises again the processor PRC connected with the storage medium STM executing the processor-readable program-instructions of the program module PGM to optimize the cyber-physical system CPS in terms of the system artifacts SA, wherein the program module PGM and the processor PRC form again the optimization engine OE with the usage-monitoring-component UMC, the data-analyzing-computing-component DACC, the generating-component GTC, the validating-component VTC and the delivering-component DLC interacting in the optimization engine OE for the optimization purpose.

What these five components UMC, DACC, GTC, VTC, DLC of the optimization engine OE again are doing exactly regarding the optimization purpose is described next.

First again, the usage-monitoring-component UMC monitors calls on the at least one interface IF, so-called interface calls IC, of system users SYU. These system users SYU are again for example either the other systems such as the cloud-based Client System consisting of information technology and physical nature or the humans. The interface calls IC are the usages of the at least interface IF by accesses of system users SYU.

Second again, the data-analyzing-computing-component DACC analyzes the usage data UD and furthermore the system-artifacts-data SAD, which are related to the system artifacts SA to be optimized. Again the system artifacts SA used in this context could be anyone of the system-hardware-artifacts SHA and those ones among them as well as the system-software-artifacts SSA and those ones among them according to the aforementioned statements. Result of this analysis is again the analysis information AIF. In particular, it includes again the statistical frequency distribution of such interface calls IC and/or the statistical frequency distribution of interface call sequences that are called each with the same input parameter values.

Again alternatively it is also possible that the data-analyzing-computing-component DACC analyzes the usage data UD and the system-artifacts-data SAD together with the additional access data AD related to the system user accesses. These access data AD again are preferably source codes of the system users SYU calling the at least one interface IF. By additionally analyzing the access data AD, in particular the source code, it is possible to identify in addition, when output parameters are used, which are the result of one interface call IC, within the source code, as input parameters for a subsequent interface call within an interface call sequence. In doing so, it is identified whether or when there is a logical connection of calls in an interface call sequence.

The analysis of the data UD, SAD, AD leads again in each of the addressed options to the analysis information AIF. Based on the analysis and the corresponding analysis information AIF the data-analyzing-computing-component DACC computes again the at least one optimization of the system artifacts SA.

Again the data-analyzing-computing-component DACC of the optimization engine OE is designed preferably such that the at least one pattern in subsequent interface calls is or the usages of the at least one interface IF are detected by the analysis.

Third again, the generating-component GTC generates the at least one improved system artifact SAᵢ based on the computed optimization.

With regard to the aforementioned cited and explained categorization of the system artifacts SA and following this categorization in its general form the at least one improved system artifact SAᵢ is again according to the indicated depiction in the FIGURE 2 each one of
- the improved system-hardware-artifact <SHA> SHAᵢ including either the at least one additional SHA-interface SHA-IFₐ and the at least one additional SHA-implementation SHA-IPₐ or the at least one additional SHA-interface SHA-IFₐ, the at least one additional SHA-implementation SHA-IPₐ and the at least one further additional SHA-element SHA-ELₐ, which again can be in particular the at least one additional SHA-interface specification SHA-IFSPₐ, the at least one additional SHA-implementation specification SHA-IPSPₐ, the at least one additional SHA-validator-specification SHA-VSPₐ, the at least one additional SHA-validator-implementation SHA-VIPₐ and/or the at least one additional SHA-documentation SHA-DOₐ,
   and
- the improved system-software-artifact <SSA> SSAᵢ including either the at least one additional SSA-interface SSA-IFₐ and the at least one additional SSA-implementation SSA-IPₐ or the at least one additional SSA-interface SSA-IFₐ, the at least one additional SSA-implementation SSA-IPₐ and the at least one further additional SSA-element SSA-ELₐ, which again can be in particular the at least one additional SSA-interface specification SSA-IFSPₐ, the at least one additional SSA-implementation specification SSA-IPSPₐ, the at least one additional SSA-validator-specification SSA-VSPₐ, the at least one additional SSA-validator-implementation SSA-VIPₐ and/or the at least one additional SSA-documentation SSA-DOₐ.

Again the main target of the optimization, carried out in the data-analyzing-computing-component DACC and based of the analysis information AIF, is the improvement of interface-related system artifacts. But according to the categorization of the at least one improved system artifact SAᵢ in its general form given above it is not the only target. This means again, that among the optimized and thus generated improved system artifacts SAᵢ, the optimization is computed for the at least one SHA-interface SHA-IF, the at least one SHA-interface specification SHA-IFSP, the at least one SSA-interface SSA-IF and/or the at least one SHA-interface specification SSA-IFSP.

Thus again the optimization of the interface-related system artifacts either constitutes the at least one additional SHA-interface SHA-IFₐ and/or the at least one additional SSA-interface SSA-IFₐ or specifies according to the at least one additional SHA-interface specification SHA-IFSPₐ and/or the at least one additional SHA-interface specification SSA-IFSPₐ the new interface with the new interface signature being generated by the generating-component GTC regarding the generated improved system artifacts SAᵢ as depicted and indicated in the FIGURE 1 by an arrow from the GTC-block to the SAᵢ-block.

The interface signature hereby is defined again, in alignment with the state of practice, as the set of input parameter types, the set of output parameter types (i.e. result types) and the identifying name of the interface.

Again based on the analysis information AIF the data-analyzing-computing-component DACC computes the improved interface signature. This includes in particular:
- the improved new interface signature for those interface calls that are frequent with the same parameter values, which has the same input parameters types as the interface frequently called, but without the parameter types that are frequently set to the same parameter values.
- the improved new interface signature for those interface call sequences that are frequent with the same parameter values, which has as input parameters types the superset of all input parameter types of all interfaces involved in the call sequence, but without the parameter types that are frequently set to the same parameter values.

Again in addition to the interface-related system artifacts optimized and generated as described above, also the other system artifacts can be optimized and generated to improve the interface-related system artifacts. In particular, this includes implementation-related system artifacts such as the at least one SHA-implementation SHA-IP, the at least one SHA-implementation specification SHA-IPSP, the at least one SSA-implementation SSA-IP and/or the at least one SSA-implementation specification SSA-IPSP.

Thus again the optimization of the implementation-related system artifacts provides the at least one additional SHA-implementation SHA-IPₐ, the at least one additional SHA-implementation specification SHA-IPSPₐ, the at least one additional SSA-implementation SSA-IPₐ and/or the at least one additional SSA-implementation specification SSA-IPSPₐ being generated by the generating-component GTC regarding the generated improved system artifacts SAᵢ as depicted and indicated in the FIGURE 2 by the arrow from the GTC-block to the SAᵢ-block.

For instance again, when the system artifact SA is the at least one SSA-implementation SSA-IP, the at least one additional SSA-implementation SSA-IPₐ is generated by applying the concept of code refactoring. According to the state of practice, the code refactoring allows to restructure existing code, and also generate additional new code, that can be guaranteed to be functionally equivalent via mathematical transformation rules.

For example again, the generated at least one additional SSA-implementation SSA-IPₐ of the at least one additional SSA-interface SSA-IFₐ with the reduced set of parameter types will comprise the interface call to the already existing at least one SSA-interface SSA-IF, whereas all parameters that are part of the set of parameter types of the at least one additional SSA-interface SSA-IFₐ are passed on unchanged, while the remaining parameters are generated to be set to fixed values, which correspond to the value that have occurred frequently during the analysis of the usage data UD.

Again as further example, for generating the at least one additional SSA-implementation SSA-IPₐ of the at least one additional SSA-interface SSA-IFₐ that represents the whole sequence of the interface calls IC, the implementation will include the sequence of the interface calls IC, whereas all parameters that are part of the set of parameter types of the at least one additional SSA-interface SSA-IFₐ are passed on unchanged, while the remaining parameters are generated to be set to fixed values, which correspond to the value that have occurred frequently during the analysis of the usage data UD.

Again in case logical connections between the function calls are detected via source code analysis, this knowledge can be used to also connect the input and output parameter types of the interface calls within the interface call sequence.

Again in order to generate other systems artifacts SA, the concept of code refactoring is applied correspondingly to other system artifact types such as the at least one SHA-implementation specification SHA-IPSP, e.g. given by electro-mechanical plans.

So again, the generating-component GTC of the optimization engine OE is designed preferably such that the at least one additional SHA-interface specification SHA-IFSPₐ, the at least one additional SHA-implementation specification SHA-IPSP, the at least one additional SSA-interface SSA-IFₐ, the at least one additional SSA-implementation SSA-IPₐ, the at least one additional SSA-interface specification SSA-IFSPₐ and/or the at least one additional SSA-implementation specification SSA-IPSP as result of the artifact computation and the artifact generation are generated, which are syntactically correct being guaranteed by applying interface or implementation refactoring.

Furthermore again, the data-analyzing-computing-component DACC and the generating-component GTC of the optimization engine OE are designed preferably such that the quality attributes of the at least one additional SSA-interface SSA-IFₐ and/or the at least one additional SSA-implementation SSA-IPₐ are improved explicitly by reducing the number of the interface calls IC or the usages of the at least one interface IF, especially the at least one SHA-interface SHA-IF or the at least one SSA-interface SSA-IF, required to achieve the same functionality, by reducing the number of parameters to be provided to the at least one interface IF, especially the at least one SHA-interface SHA-IF or the at least one SSA-interface SSA-IF, to achieve the same functionality and/or by optimizing on operational qualities. These operational qualities are again for example the system performance on the side of the system user SYU and the system load on the side of the cyber-physical system CPS.

Fourth again, the validating-component VTC validates the cyber-physical system CPS in terms of the at least one improved system artifact SAᵢ to ensure from the functional and quality perspective the correct operation of the cyber-physical system CPS. This validation is depicted and indicated in the FIGURE 2 by the arrow from the VTC-block to the CPS-block.

Again in addition to the interface-related and implementation-related system artifacts optimized and generated as described above, also the validation-related system artifacts can be optimized and generated to improve the validation-related system artifacts. In particular, this includes validation-related system artifacts such as the at least one SHA-validator-specification SHA-VSP, the at least one SHA-validator-implementation SHA-VIP, the at least one SSA-validator-specification SSA-VSP and/or the at least one SSA-validator-implementation SSA-VIP.

Thus again the optimization of the validation-related system artifacts provides the at least one additional SHA-validator-specification SHA-VSPₐ, the at least one additional SHA-validator-implementation SHA-VIPₐ, the at least one additional SSA-validator-specification SSA-VSPₐ and/or the at least one additional SSA-validator-implementation SSA-VIPₐ being generated by the generating-component GTC regarding the generated improved system artifacts SAᵢ as depicted and indicated in the FIGURE 2 by the arrow from the GTC-block to the SAᵢ-block.

So again for instance, with reference to the at least one additional SSA-validator-specification SSA-VSPₐ and/or the at least one additional SSA-validator-implementation SSA-VIPₐ such as the concepts of the code refactoring are applied directly and with respect to the at least one additional SHA-validator-specification SHA-VSPₐ and/or the at least one additional SHA-validator-implementation SHA-VIPₐ it is done correspondingly, in order to generate the test cases for the at least one additional SHA-interface SHA-IFₐ and/or the at least one additional SSA-interface SSA-IFₐ which are functionally equivalent to the already existing test cases.

Sent again the foregoing ahead the validating-component VTC of the optimization engine OE is moreover designed preferably such that the verification of what is provided by the at least one additional SSA-interface SSA-IFₐ and/or the at least one additional SSA-implementation SSA-IPₐ, is done by providing verifiably the at least identical functional results, while the quality attributes of the optimized cyber-physical system CPSₒ are improved also verifiably and/or by deploying at least one additional validator, e.g. at least one test case, according to the at least one additional SSA-validator-specification SSA-VSPₐ and/or the at least one additional SSA-validator-implementation SSA-VIPₐ. In this context the at least one additional validator is for example the at least one test case.

Again furthermore, the data-analyzing-computing-component DACC, the generating-component GTC and the validating-component VTC of the optimization engine OE are designed preferably such that the at least one interface IF, especially the at least one SHA-interface SHA-IF or the at least one SSA-interface SSA-IF, as result of the artifact computation and the artifact generation is modified, thereby ensuring that all rules defined for the interface compatibility are adhered to. This preferably means that before the modification all usages of the at least one interface IF, the at least one SHA-interface SHA-IF or the at least one SSA-interface SSA-IF must still return the functionally correct results and all defined quality characteristics, such as performance, of the at least one interface IF, the at least one SHA-interface SHA-IF or the at least one SSA-interface SSA-IF still apply.

Finally again, the data-analyzing-computing-component DACC, the generating-component GTC and the validating-component VTC of the optimization engine OE are designed preferably such that the at least one additional validator according to the at least one additional SSA-validator-specification SSA-VSPₐ and/or the at least one additional SSA-validator-implementation SSA-VIPₐ as the result of the artifact computation and the artifact generation and based on the analysis information AIF are generated to ensure that that the validation criteria of the functional and quality characteristics of the at least one SSA-interface SSA-IF of the cyber-physical system CPS are transferred to the at least one additional SSA-interface SSA-IF.

Fifth again and finally after the above is implemented, the delivering-component DLC forms an optimized cyber-physical system CPSₒ based on assembling the improved system artifact SAᵢ and deploys the optimized cyber-physical system CPSₒ to its operational environment. This forming and deploying is depicted and indicated in the FIGURE 2 by the arrow from the DLC-block to the SAᵢ-block and the CPS-block through which it should be indicated that the optimized cyber-physical system CPSₒ is formed and deployed.

## Claims

1. Method for optimizing a cyber-physical system (CPS) in terms of system artifacts (SA), by which data on usages of at least one interface (IF) of the cyber-physical system (CPS), usage data (UD), are collected,
**characterized by**
**a)** monitoring interface calls (IC), the usages of the at least interface (IF) by accesses of system users (SYU), in particular either other systems consisting of information technology and physical nature or humans, to collect the usage data (UD),
**b)** analyzing either the usage data (UD) and system-artifacts-data (SAD) related to the system artifacts (SA) to be optimized or the usage data (UD), system-artifacts-data (SAD) related to the system artifacts (SA) to be optimized and access data (AD) related to the system user accesses, in particular source codes of the system users (SYU) calling the at least one interface (IF),
**c)** computing at least one optimization of the system artifacts (SA) based on the analysis and corresponding analysis information (AIF),
**d)** generating at least one improved system artifact (SAᵢ) based on the computed optimization,
**e)** validating the cyber-physical system (CPS) in terms of the at least one improved system artifact (SAᵢ) to ensure from a functional and quality perspective a correct operation of the cyber-physical system (CPS),
**f)** forming an optimized cyber-physical system (CPSₒ) based on assembling the improved system artifact (SAᵢ),
**g)** deploying the optimized cyber-physical system (CPSₒ) for its operational environment.

2. Method according to claim 1, **characterized in that** at least one pattern in subsequent interface calls is or the usages of the at least one interface (IF) are detected by the analysis.

3. Method according to claim 1 or 2, **characterized in that**
the system artifacts (SA) are at least one of
- system-hardware-artifacts <SHA> (SHA) including either at least one SHA-interface (SHA-IF) and at least one SHA-implementation (SHA-IP) or at least one SHA-interface (SHA-IF), at least one SHA-implementation (SHA-IP) and at least one further SHA-element (SHA-EL), in particular at least one SHA-interface specification (SHA-IFSP), at least one SHA-implementation specification (SHA-IPSP), at least one SHA-validator-specification (SHA-VSP), at least one SHA-validator-implementation (SHA-VIP) and/or at least one SHA-documentation (SHA-DO),
and
- system-software-artifacts <SSA> (SSA) including either at least one SSA-interface (SSA-IF) and at least one SSA-implementation (SSA-IP) or at least one SSA-interface (SSA-IF), at least one SSA-implementation (SSA-IP) and at least one further SSA-element (SSA-EL), in particular at least one SSA-interface specification (SSA-IFSP), at least one SSA-implementation specification (SSA-IPSP), at least one SSA-validator-specification (SSA-VSP), at least one SSA-validator-implementation (SSA-VIP) and/or at least one SSA-documentation (SSA-DO).

4. Method according to claim 3, **characterized in that** each the at least one improved system artifact (SAᵢ) is at least one of
- an improved system-hardware-artifact <SHA> (SHAᵢ) including either at least one additional SHA-interface (SHA-IFₐ) and at least one additional SHA-implementation (SHA-IPₐ) or at least one additional SHA-interface (SHA-IFₐ), at least one additional SHA-implementation (SHA-IPₐ) and at least one further additional SHA-element (SHA-ELₐ), in particular at least one additional SHA-interface specification (SHA-IFSPₐ), at least one additional SHA-implementation specification (SHA-IPSPₐ), at least one additional SHA-validator-specification (SHA-VSPₐ), at least one additional SHA-validator-implementation (SHA-VIPₐ) and/or at least one additional SHA-documentation (SHA-DOₐ),
and
- an improved system-software-artifact <SSA> (SSAᵢ) including either at least one additional SSA-interface (SSA-IFₐ) and at least one additional SSA-implementation (SSA-IPₐ) or at least one additional SSA-interface (SSA-IFₐ), at least one additional SSA-implementation (SSA-IPₐ) and at least one further additional SSA-element (SSA-ELₐ), in particular at least one additional SSA-interface specification (SSA-IFSPₐ), at least one additional SSA-implementation specification (SSA-IPSPₐ), at least one additional SSA-validator-specification (SSA-VSPₐ), at least one additional SSA-validator-implementation (SSA-VIPₐ) and/or at least one additional SSA-documentation (SSA-DOₐ).

5. Method according to claim 4, **characterized in that** the at least one additional SHA-interface specification (SHA-IFSPₐ), the at least one additional SHA-implementation specification (SHA-IPSPₐ), the at least one additional SSA-interface (SSA-IFₐ), the at least one additional SSA-implementation (SSA-IPₐ), the at least one additional SSA-interface specification (SSA-IFSPₐ) and/or the at least one additional SSA-implementation specification (SSA-IPSPₐ) as result of the artifact computation and the artifact generation are/is generated, which are/is syntactically correct being guaranteed by applying interface or implementation refactoring.

6. Method according to claim 4 or 5, **characterized in that**
a verification,
of what is provided by the at least one additional SSA-interface (SSA-IFₐ) and/or the at least one additional SSA-implementation (SSA-IPₐ), is done by
- providing verifiably at least identical functional results, while quality attributes of the optimized cyber-physical system (CPSₒ) are improved also verifiably and/or
- deploying at least one additional validator, e.g. at least one test case, according to the at least one additional SSA-validator-specification (SSA-VSPₐ) and/or the at least one additional SSA-validator-implementation (SSA-VIPₐ).

7. Method according to claim 6, **characterized in that** the quality attributes of the at least one additional SSA-interface (SSA-IFₐ) and/or the at least one additional SSA-implementation (SSA-IPₐ) are/is improved explicitly by at least one of
- reducing a number of the interface calls (IC) or the usages of the at least one interface (IF) required to achieve the same functionality,
- reducing a number of parameters to be provided to the at least one interface (IF) to achieve the same functionality,
- optimizing on operational qualities, such as system performance on the side of the system user (SYU) and system load on the side of the cyber-physical system (CPS).

8. Method according to one of the claims 4 to 7, **characterized in that**
the at least one interface (IF, SHA-IF, SSA-IF) as result of the artifact computation and the artifact generation is modified thereby ensuring that all rules defined for interface compatibility are adhered to, in particular that before the modification all usages of the at least one interface (IF, SHA-IF, SSA-IF) must still return functionally correct results and all defined quality characteristics, such as performance, of the at least one interface (IF, SHA-IF, SSA-IF) still apply.

9. Method according to claim 6, **characterized in that** the at least one additional validator according to the at least one additional SSA-validator-specification (SSA-VSPₐ) and/or the at least one additional SSA-validator-implementation (SSA-VIPₐ) as result of the artifact computation and the artifact generation and based on the analysis information (AIF) are generated to ensure that that validation criteria of functional and quality characteristics of the at least one SSA-interface (SSA-IF) of the cyber-physical system (CPS) are transferred to the at least one additional SSA-interface (SSA-IF) .

10. Computer-implemented tool (CIT) for optimizing a cyber-physical system (CPS) in terms of system artifacts (SA), by which data on usages of at least one interface (IF) of the cyber-physical system (CPS), usage data (UD), are collected, **characterized by**
a non-transitory, processor-readable storage medium (STM) having processor-readable program-instructions of a program module (PGM) for optimizing the cyber-physical system (CPS) in terms of the system artifacts (SA) stored in the non-transitory, processor-readable storage medium (STM) and a processor (PRC) connected with the storage medium (STM) executing the processor-readable program-instructions of the program module (PGM) to optimize the cyber-physical system (CPS), wherein the program module (PGM) and the processor (PRC) form an optimization engine (OE) with following components such that:
**a)** a usage-monitoring-component (UMC) monitors interface calls (IC), the usages of the at least interface (IF) by accesses of system users (SYU), in particular either other systems consisting of information technology and physical nature or humans, to collect the usage data (UD),
**b)** a data-analyzing-computing-component (DACC)
- analyzes either the usage data (UD) and system-artifacts-data (SAD) related to the system artifacts (SA) to be optimized or the usage data (UD), system-artifacts-data (SAD) related to the system artifacts (SA) to be optimized and access data (AD) related to the system user accesses, in particular source codes of the system users (SYU) calling the at least one interface (IF), and
- computes at least one optimization of the system artifacts (SA) based on the analysis and corresponding analysis information (AIF),
**c)** a generating-component (GTC) generates at least one improved system artifact (SAᵢ) based on the computed optimization,
**d)** a validating-component (VTC) validates the cyber-physical system (CPS) in terms of the at least one improved system artifact (SAᵢ) to ensure from a functional and quality perspective a correct operation of the cyber-physical system (CPS),
**e)** a delivering-component (DLC)
- forms an optimized cyber-physical system (CPSₒ) based on assembling the improved system artifact (SAᵢ) and
- deploys the optimized cyber-physical system (CPSₒ) for its operational environment.

11. Computer-implemented tool (CIT) according to claim 10, **characterized in that**
the data-analyzing-computing-component (DACC) of the optimization engine (OE) is designed such that at least one pattern in subsequent interface calls is or the usages of the at least one interface (IF) are detected by the analysis.

12. Computer-implemented tool (CIT) according to claim 10 or 11, **characterized in that**
the system artifacts (SA) are at least one of
- system-hardware-artifacts <SHA> (SHA) including either at least one SHA-interface (SHA-IF) and at least one SHA-implementation (SHA-IP) or at least one SHA-interface (SHA-IF), at least one SHA-implementation (SHA-IP) and at least one further SHA-element (SHA-EL), in particular at least one SHA-interface specification (SHA-IFSP), at least one SHA-implementation specification (SHA-IPSP), at least one SHA-validator-specification (SHA-VSP), at least one SHA-validator-implementation (SHA-VIP) and/or at least one SHA-documentation (SHA-DO)
and
- system-software-artifacts <SSA> (SSA) including either at least one SSA-interface (SSA-IF) and at least one SSA-implementation (SSA-IP) or at least one SSA-interface (SSA-IF), at least one SSA-implementation (SSA-IP) and at least one further SSA-element (SSA-EL), in particular at least one SSA-interface specification (SSA-IFSP), at least one SSA-implementation specification (SSA-IPSP), at least one SSA-validator-specification (SSA-VSP), at least one SSA-validator-implementation (SSA-VIP) and/or at least one SSA-documentation (SSA-DO).

13. Computer-implemented tool (CIT) according to claim 12, **characterized in that**
each the at least one improved system artifact (SAᵢ) is at least one of
- an improved system-hardware-artifact <SHA> (SHAᵢ) including either at least one additional SHA-interface (SHA-IFₐ) and at least one additional SHA-implementation (SHA-IPₐ) or at least one additional SHA-interface (SHA-IFₐ), at least one additional SHA-implementation (SHA-IPₐ) and at least one further additional SHA-element (SHA-ELₐ), in particular at least one additional SHA-interface specification (SHA-IFSPₐ), at least one additional SHA-implementation specification (SHA-IPSPₐ), at least one additional SHA-validator-specification (SHA-VSPₐ), at least one additional SHA-validator-implementation (SHA-VIPₐ) and/or at least one additional SHA-documentation (SHA-DOₐ)
and
- an improved system-software-artifact <SSA> (SSAᵢ) including either at least one additional SSA-interface (SSA-IFₐ) and at least one additional SSA-implementation (SSA-IPₐ) or at least one additional SSA-interface (SSA-IFₐ), at least one additional SSA-implementation (SSA-IPₐ) and at least one further additional SSA-element (SSA-ELₐ), in particular at least one additional SSA-interface specification (SSA-IFSPₐ), at least one additional SSA-implementation specification (SSA-IPSPₐ), at least one additional SSA-validator-specification (SSA-VSPₐ), at least one additional SSA-validator-implementation (SSA-VIPₐ) and/or at least one additional SSA-documentation (SSA-DOₐ).

14. Computer-implemented tool (CIT) according to claim 13, **characterized in that**
the generating-component (GTC) of the optimization engine (OE) is designed such that the at least one additional SHA-interface specification (SHA-IFSPₐ), the at least one additional SHA-implementation specification (SHA-IPSPₐ), the at least one additional SSA-interface (SSA-IFₐ), the at least one additional SSA-implementation (SSA-IPₐ), the at least one additional SSA-interface specification (SSA-IFSPₐ) and/or the at least one additional SSA-implementation specification (SSA-IPSPₐ) as result of the artifact computation and the artifact generation are/is generated, which are/is syntactically correct being guaranteed by applying interface or implementation refactoring.

15. Computer-implemented tool (CIT) according to claim 13 or 14, **characterized in that**
the validating-component (VTC) of the optimization engine (OE) is designed such that a verification,
of what is provided by the at least one additional SSA-interface (SSA-IFₐ) and/or the at least one additional SSA-implementation (SSA-IPₐ), is done by
- providing verifiably at least identical functional results, while quality attributes of the optimized cyber-physical system (CPSₒ) are improved also verifiably and/or
- deploying at least one additional validator, e.g. at least one test case, according to the at least one additional SSA-validator-specification (SSA-VSPₐ) and/or the at least one additional SSA-validator-implementation (SSA-VIPₐ).

16. Computer-implemented tool (CIT) according to claim 15, **characterized in that**
the data-analyzing-computing-component (DACC) and the generating-component (GTC) of the optimization engine (OE) are designed such that the quality attributes of the at least one additional SSA-interface (SSA-IFₐ) and/or the at least one additional SSA-implementation (SSA-IPₐ) are/is improved explicitly by at least one of
- reducing a number of the interface calls (IC) or the usages of the at least one interface (IF) required to achieve the same functionality,
- reducing a number of parameters to be provided to the at least one interface (IF) to achieve the same functionality,
- optimizing on operational qualities, such as system performance on the side of the system user (SYU) and system load on the side of the cyber-physical system (CPS).

17. Computer-implemented tool (CIT) according to one of the claims 13 to 16, **characterized in that** the data-analyzing-computing-component (DACC), the generating-component (GTC) and the validating-component (VTC) of the optimization engine (OE) are designed such that the at least one interface (IF, SHA-IF, SSA-IF) as result of the artifact computation and the artifact generation is modified, thereby ensuring that all rules defined for interface compatibility are adhered to, in particular that before the modification all usages of the at least one interface (IF, SHA-IF, SSA-IF) must still return functionally correct results and all defined quality characteristics, such as performance, of the at least one interface (IF, SHA-IF, SSA-IF) still apply.

18. Computer-implemented tool (CIT) according to claim 15, **characterized in that**
the data-analyzing-computing-component (DACC), the generating-component (GTC) and the validating-component (VTC) of the optimization engine (OE) are designed such that the at least one additional validator according to the at least one additional SSA-validator-specification (SSA-VSPₐ) and/or the at least one additional SSA-validator-implementation (SSA-VIPₐ) as result of the artifact computation and the artifact generation and based on the analysis information (AIF) are generated to ensure that that validation criteria of functional and quality characteristics of the at least one SSA-interface (SSA-IF) of the cyber-physical system (CPS) are transferred to the at least one additional SSA-interface (SSA-IF).

19. Cyber-physical system (CPS) to be optimized in terms of system artifacts (SA),
**characterized by**
a Computer-implemented tool (CIT) according to one of the claims 10 to 18 either being implemented (FIG 1) in the Cyber-physical system (CPS) or forming (FIG 2) a functional unit (FTU) with the Cyber-physical system (CPS), in particular such that the Computer-implemented tool (CIT) is uploadable (Option A) into the Cyber-physical system (CPS) or forms (Option B) either a cloud-based, centralized platform (PF_{ct}) separate to the Cyber-physical system (CPS) or a decentralized platform (PF_{dct}) separate to the Cyber-physical system (CPS), for carrying out the method according to one of the claims 1 to 9.
